# EUROPEAN PATENT SPECIFICATION

(11) **EP 3 250 473 B1**
(45) Date of publication and mention of the grant of the patent: **22.12.2021**
(21) Application number: 16701618.7
(22) Date of filing: 26.01.2016
(51) Int. Cl.: B65D 81/34

(54) **A SEALED OXYGEN-TIGHT COOKING DEVICE FOR FOOD**
ABGEDICHTETE SAUERSTOFFDICHTE GARVORRICHTUNG FÜR LEBENSMITTEL
DISPOSITIF DE CUISSON HERMÉTIQUE ÉTANCHE À L'OXYGÈNE POUR PRODUITS ALIMENTAIRES

(30) Priority: 28.01.2015 EP 15152916; 16.06.2015 EP 15172298
(43) Date of publication of application: 06.12.2017
(73) Proprietor: Convenience Food Packaging ApS, 2970 Horsholm (DK)
(72) Inventor: EBDRUP, Kirsten, 2950 Vedbæk (DK); REINHOLDT, Henning, 2950 Vedbæk (DK); REINHOLDT, Henriette, 2950 Vedbæk (DK)
(74) Representative: Kjerrumgaard, Lars Bo
(86) International application number: PCT/EP2016/051487
(87) International publication number: WO 2016/120222

(56) References cited:
- EP-A2- 0 271 268
- EP-A2- 0 303 428
- US-A1- 2005 269 318
- US-A1- 2007 251 942

## Description

### FIELD OF THE INVENTION

The present invention relates to a sealed oxygen-tight cooking device for food, such as meat, as well as a method of preparing a food comprising the steps of cooking the sealed cooking device. Typically fatty meat such as bacon is used.

### BACKGROUND OF THE INVENTION

Microwave cooking is a fast and convenient alternative to traditional food preparation techniques. In spite of the advantages of microwave cooking, it has not been completely successfully utilized for cooking of meat, such as bacon. When bacon is cooked by microwaves, the bacon volume is reduced unevenly and tends to "blossom" or wrinkle in a characteristic rosette pattern initialized at the edges of the slices due to higher temperature. Bacon that has "blossom" appearance is not readily marketable because it is not aesthetically appealing to the consumer.

Additionally, cooking the bacon using microwaves, suffers from the further disadvantage that because of its high fat content, bacon is especially messy to cook in a microwave oven. Microwave cooking instructions usually state that the bacon should rest on an absorbent surface such as paper towels in order to reduce splattering of the grease within the oven. Naturally, this step is inconvenient, it produces messy paper towels to handle and dispose of after cooking.

Another difficulty with cooking bacon in a microwave oven arises from the fact that bacon is heterogeneous, with areas of fat and areas of lean within the same slice. Because fat and lean absorb microwave energy at different rates, it is difficult to obtain uniform cooking even within the same slice. This problem is aggravated by the fact that the bacon slices tend to curl as they are cooked. As a result, pools of melted fats and oils can accumulate on the surface of the bacon thereby causing even further heating non-uniformity.

Some of these difficulties encountered in attempting to cook bacon utilizing microwaves have been overcome by reformulating the food products, designing special equipment to be used with the microwave oven, or specifying detailed instructions for cooking particular food Document EP-A-271268 discloses a sealed oxygen-tight cooking device for bacon according to the preamble of independent claim 1.

Thus, a need has arisen in the art for a microwave-active sealed packaging for retail and preparation of sliced bacon in domestic microwave ovens that enables improved cooking convenience and aesthetic appearance of the cooked bacon.

### SUMMARY OF THE INVENTION

The inventors have realized that a novel ready-to-use sealed oxygen-tight cooking device comprising food as described herein has many advantages, including no cleaning, no dishwashing, no smells or unpleasant odors, limited steam in the cooking area e.g. kitchen, no risk of scolding due to grease, faster cooking time, eco-friendly, reduced energy consumption, even frying in particular because of the susceptor material, in case of cooking bacon it becomes crispy and at least more crispy than other known bacon cooking devices, more convenience since no supplementary preparing needed, no further cooking remedies needed, the food, such as bacon stays in position on the support layer, the device can be used in a regular oven as well as a microwave oven, and it is possible to produce and sell the product of the present invention at low costs.

The present invention relates to a sealed oxygen-tight cooking device for bacon according to independent claim 1.

In another embodiment the corrugated fat-absorbing support layer is adapted to support from 4 to 20 bacon slices, such as 6-10, e.g. 8.

In a further embodiment the corrugated fat-absorbing support layer is zig-zag shaped.

In a further embodiment a third layer preventing the meat from sticking to the corrugated fat-absorbing support layer is placed between the corrugated fat-absorbing support layer and the meat. In a further embodiment the corrugated fat-absorbing support layer has been treated so as to preventing the meat from sticking to the corrugated fat-absorbing support layer when the meat is placed directly on the corrugated fat-absorbing support layer.

In a further embodiment the first layer is in contact with the meat and the corrugated fat-absorbing support layer and follows the corrugated shape of the corrugated fat-absorbing support layer.

In a further embodiment the first layer is selected from a polysulfone, a polyester, such as polyalkylene terephthalate, e.g. PET.

In a further embodiment the first layer is a film having a thickness from 8 micron to 20 micron, such as 10-12 micron.

In a further embodiment the second layer is selected from a polysulfone, a polyester, such as polyalkylene terephthalate, e.g. PET.

In a further embodiment the second layer is a film having a thickness from 8 micron to 20 micron, such as 10-12 micron.

In a further embodiment the first layer and second layer are made of one bag.

In a further embodiment the corrugated fat-absorbing support layer is made of a grease proof material allowed to food contact at a temperature up to at least 250 °C, such as from 200-250 °C. The term "grease proof' is intended to mean that the corrugated fat-absorbing support layer does not get damaged, ruined or destroyed when grease is absorbed into the support layer, but maintain its corrugated shape during cooking and unpacking of the cooked meat. In a further embodiment the corrugated fat-absorbing support layer is able to absorb fat from both sides, that is, the side that faces the meat, such as bacon, and the opposite side. In another embodiment the corrugated fat-absorbing support layer is able to absorb fat from only the side that faces the meat.

In a further embodiment the corrugated fat-absorbing support layer is made of cellulose or absorbent paper material, typically having a thickness of from 200 to 1000 microns, such as 300-400 microns, e.g. 330 microns.

In a further embodiment the corrugated fat-absorbing support layer has a density high enough to secure the mechanical stability of the cooking device, preferably the corrugated fat-absorbing support layer is made of an absorbent paper having a density higher than 70 g/m², such as 330 g/m².

In a further embodiment the second layer is in contact with the corrugated fat-absorbing support layer and follows the corrugated shape of the corrugated fat-absorbing support layer.

In a further embodiment vacuum is present inside the cooking device.

In a further embodiment a gas not containing oxygen is present inside the cooking device, such as the gas being CO₂ or N₂, or a mixture thereof.

In a further embodiment a conductive material which adapts itself to emit heat when it absorbs microwaves is placed on the corrugated fat-absorbing support layer or is incorporated in the corrugated fat-absorbing support layer, such as heat emitting stripes cutout of commercially available microwave susceptor film, e.g. a safety type susceptor film.

In a further embodiment the means for preventing inflation by warm moist air during cooking is selected from perforations and a valve, such an overpressure valve.

In a further embodiment the cooking device of the present invention, comprises a means for maintaining the corrugated shape of the corrugated fat-absorbing support layer when placed in the oven.

In a further embodiment the means is selected from a flexible stripe label typically made of a PET film which is able to hold and support the corrugated shape of the corrugated fat-absorbing support layer when placed in the oven.

In a further embodiment the openings of the corrugated fat-absorbing support layer are elongated and extend to near the edges of the corrugated layer leaving the edge portions of the corrugated layer intact.

In a further embodiment a closed bag encompass the cooking device for providing longer shelf-life.

### DRAWINGS

The invention will now be described more fully with reference to the appended drawings illustrating preferred embodiments of the present invention.
Figure 1 illustrates the corrugated fat-absorbing support layer having a zig-zag shape and wherein bacon in slices are placed on the support layer.
Figure 2 illustrates a cross-sectional view of a part of the cooking device which is corrugated.
Figure 3 illustrates the cooking device with a means for maintaining the corrugated shape of the corrugated fat-absorbing support layer.
Figure 4 illustrates the fat-absorbing suport layer which is flat with holes as openings in the support layer. Said embodiment is not within the scope of the claims.
Figure 5 illustrates a cross-sectional view of a part of the cooking device which is flat. Said embodiment is not within the scope of the claims.

### DESCRIPTION OF THE INVENTION

In a broad aspect the present invention relates to a sealed oxygen-tight cooking device for food comprising
a) a first layer with means for preventing inflation by warm moist air during cooking,
b) a second layer impervious to grease and liquid from the food,
c) a fat-absorbing support layer between the first layer and the second layer, wherein the fat-absorbing support layer has openings there through, said fat-absorbing support layer is adapted to support a food thereon, and
d) the food placed on the fat-absorbing support layer;
wherein the first layer, the second layer and the fat-absorbing support layer are made from materials suitable for use in an oven.

In a further embodiment the fat-absorbing support layer is flat.

In a still further embodiment the openings are arranged so that the food when placed covers the openings. Typically, the fat-absorbing support layer is flat and the openings are arranged so that the food, such as bacon, e.g. bacon slices, when placed covers the openings.

In a further embodiment the food is meat or egg, such as egg. Typically when the food is egg, the present invention relates to a sealed oxygen-tight cooking device for egg comprising
a) a first layer with means for preventing inflation by warm moist air during cooking,
b) a second layer impervious to grease and liquid from the egg,
c) a flat fat-absorbing support layer between the first layer and the second layer, optionally wherein the fat-absorbing support layer has openings there through, said fat-absorbing support layer is adapted to support an egg thereon, and
d) the egg placed on the fat-absorbing support layer;
wherein the first layer, the second layer and the fat-absorbing support layer are made from materials suitable for use in an oven, such as microwave oven. In a typical embodiment, when the food is egg, the fat-absorbing support layer has no openings.

In a further embodiment the fat-absorbing support layer is adapted to support from 3 to 6 bacon slices, typically 3 bacon slices.

In a further aspect the present invention relates to a sealed oxygen-tight cooking device for meat comprising
a) a first layer with means for preventing inflation by warm moist air during cooking,
b) a second layer impervious to grease and liquid from the meat,
c) a corrugated fat-absorbing support layer between the first layer and the second layer, wherein the corrugated fat-absorbing support layer has alternating ridges and hollows, the corrugated fat-absorbing support layer has openings there through, said openings are located in said hollows, said corrugated fat-absorbing support layer is adapted to support a meat thereon, and
d) the meat placed on the corrugated fat-absorbing support layer;
wherein the first layer, the corrugated fat-absorbing support layer, and the second layer are made from materials suitable for use in an oven.

The cooking device must be sealed and oxygen tight in order to avoid bacterias and vira infecting the meat during shelf-life until reaching the consumer. Thus, as used herein "sealed oxygen-tight" means that no oxygen can enter the cooking device when sealed, and that preferably no oxygen is present inside the cooking device when ready-to-use by the consumer.

Allthough the cooking device can be used in a conventional oven it is particularly useful in a microwave oven.

An active package for a microwaveable food product is one that changes the electromagnetic field configuration and thus the heating pattern of the product contained within. Active packaging particularly includes conductive materials and among them the materials that adapt themselves to emit heat when absorbs microwaves. These materials are so-called microwave susceptors. Passive packaging, on the other hand, is packaging that does not appreciably affect the microwave heating pattern; that is, it is essentially transparent to the passage of microwaves.

Cooking bacon by microwaves in active packaging as opposed to microwave cooking in passive packaging has the advantage that the bacon can be cooked evenly almost regardless of the cooked amount. The problem of being "blossom" or wrinkle is thereby overcome too.

Additionally, active packaging for microwave cooking can be implemented along with the modified atmosphere or vacuum packaging for warehousing of bacon. Since the packaging is sealed, it also solves the problem of grease and intensive smell when cooking bacon in a microwave oven. Therefore, implementation of a microwave-active, sealed and modified atmosphere or vacuum package turns packed sliced bacon into a highly convenient food product.

In an embodiment the oven is a microwave oven.

In another embodiment the food is meat e.g. fatty meat, such as bacon, e.g. bacon slices. Other examples of meat are sausage, e.g. salami slices, ham in slices, beef in slices. The fat-absorbing support layer, such as corrugated fat-absorbing support layer, can be adapted to support from 2 to 100 or more slices of meat, such as bacon slices. However for fitting into an oven or microwave oven, the typical number of bacon slices for the corrugated support layer are from 4 to 10, such as 7 or 8.

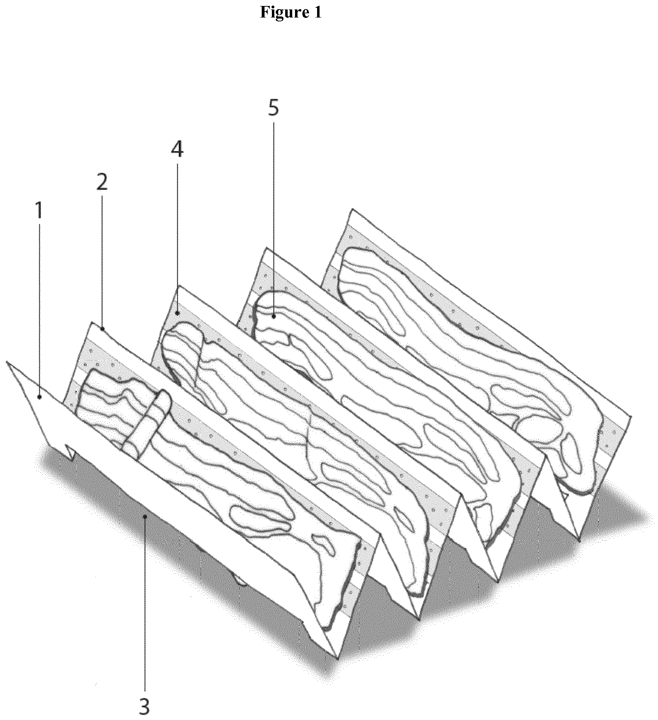

In a further embodiment the corrugated fat-absorbing support layer is zig-zag shaped. The zig-zag shape is illustrated in the figures 1-3.

The meat, and in particular the fatty meat, may stick to the support layer and will make it less delicious for the consumer, and therefore typically, a third layer preventing the meat from sticking to the corrugated fat-absorbing support layer is placed between the fat-absorbing support layer, such as corrugated fat-absorbing support layer, and the meat. Alternatively, the fat-absorbing support layer, such as corrugated fat-absorbing support layer, has been treated so as to prevent the meat from sticking to the fat-absorbing support layer when the meat is placed directly on the fat-absorbing support layer.

In a further embodiment the third layer is selected from a polysulfone, a polyester, such as polyalkylene terephthalate, e.g. polyethylene terephthalate (PET). In a further embodiment the third layer is a film having a thickness from 4 to 50 micron, such as 8 micron to 20 micron, typically 10-12 micron.

During cooking the meat may move towards the hollows in the corrugated fat-absorbing support layer, and it is preferred to avoid such movement of the meat to ensure even cooking, by placing the first layer is in contact with the meat and the corrugated fat-absorbing support layer and let it follow the corrugated shape of the corrugated fat-absorbing support layer.

In a further embodiment the first layer is selected from a polysulfone, a polyester, such as polyalkylene terephthalate, e.g. PET.

In a further embodiment the first layer is a film, such as a PET film having a thickness from 4 to 50 micron, such as 8 micron to 20 micron, typically 10-12 micron.

In a further embodiment the second layer is selected from a polysulfone, a polyester, such as polyalkylene terephthalate, e.g. PET.

In a further embodiment the second layer is a film, such as a PET film having a thickness from 4 to 50 micron, such as 8 micron to 20 micron, typically 10-12 micron.

In a further embodiment the first layer and second layer are made of one bag. Typically, the bag is made of one and the same material, such as a polysulfone, a polyester, such as polyalkylene terephthalate, e.g. PET, and is welded in a conventional manner to make the sealed oxygen-tight bag.

When the first and second layer are made from separate layers, which may be the same material or different, they are welded along the edges of the fat-absorbing support layer, such as corrugated fat-absorbing support layer, in a conventional manner to make the sealed oxygen-tight device.

In a further embodiment the fat-absorbing support layer, such as corrugated fat-absorbing support layer, is made of a grease proof material allowed to food contact at a temperature up to at least 200 °C, such as from 200-250 °C.

In a further embodiment the fat-absorbing support layer, such as corrugated fat-absorbing support layer, is made of cellulose or absorbent paper material, typically having a thickness of from 200 to 1000 microns, such as 300-400 microns, e.g. 330 microns.

In a further embodiment the fat-absorbing support layer, such as corrugated fat-absorbing support layer, has a density high enough to secure the mechanical stability of the cooking device, preferably the fat-absorbing support layer is made of an absorbent paper having a density higher than 70 g/m², such as from 300 to 400 g/m², e.g. 330 g/m².

In a further embodiment the second layer is in contact with the corrugated fat-absorbing support layer and follows the corrugated shape of the corrugated fat-absorbing support layer. When both the first and second layer is in contact with the corrugated fat-absorbing support layer and follows the corrugated shape of the corrugated fat-absorbing support layer, this is an advantage when the cooking device is to be packed in a convenient way to avoid taking up too much space in a warehouse or in the consumer's refrigerator.

In a further embodiment vacuum is present inside the cooking device. The vacuum ensures that no oxygen is present and that the cooking device can be packed in a convenient way as described above when both the first and second layer is in contact with the fat-absorbing support layer, such as the corrugated fat-absorbing support layer and follows the corrugated shape of the corrugated fat-absorbing support layer.

As an alternative the space inside the cooking device may be filled with a gas not containing oxygen, such as the gas being CO₂ or N₂, or a mixture thereof. This will however, make the cooking device less convenient for the warehouses and consumer due to taking up more space.

In a further embodiment a conductive material which adapts itself to emit heat when it absorbs microwaves is placed on the fat-absorbing support layer, such as corrugated fat-absorbing support layer, such as heat emitting stripes cutout of commercially available microwave susceptor film, e.g. a safety type susceptor film.

In a further embodiment a conductive material which adapts itself to emit heat when it absorbs microwaves is incorporated in the fat-absorbing support layer, such as the corrugated fat-absorbing support layer.

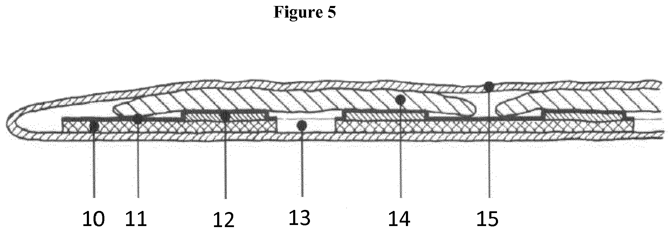

It is apparent that when the third layer is applied for use in a microwave oven, the third layer as described above should preferably be placed over the heat emitting stripes placed on the fat-absorbing support layer, such as the corrugated fat-absorbing support layer, so that the food, e.g. meat, such as bacon slices, rests on the third layer. This is also shown in figure 5.

In a further embodiment the means for preventing inflation by warm moist air during cooking is selected from perforations. In a still further embodiment the means for preventing inflation by warm moist air during cooking is selected from a valve, such an overpressure valve.

In a further embodiment the cooking device of the present invention, comprises a means for maintaining the corrugated shape of the corrugated fat-absorbing support layer when placed in the oven, such as the microwave oven. In an embodiment the means is selected from a flexible stripe label typically made of a PET film which is able to hold and support the corrugated shape of the corrugated fat-absorbing support layer when placed in the oven.

In a further embodiment the openings of the fat-absorbing support layer, such as the corrugated fat-absorbing support layer, are elongated and extend to near the edges of the corrugated layer leaving the edge portions of the corrugated layer intact. In another embodiment the openings of the fat-absorbing support layer, such as the corrugated fat-absorbing support layer, are round or oval holes, such as 1, 2 or 3 holes placed in the hollow between the edge portions of the corrugated layer.

In a further embodiment a closed bag, such as a bag made of a polysulfone, a polyester, such as polyalkylene terephthalate, e.g. PET, which bag encompass the cooking device for providing longer shelf-life.

In another aspect the present invention relates to a method of preparing a cooked food, such as meat comprising the steps of cooking the sealed cooking device of the present invention in an oven under conditions to prepare the food, e.g. meat for food consumption by a mammal, wherein the cooking device is placed on a substantially horizontal surface with the first layer facing upwards and the second layer facing downwards. If the fat-absorbing support layer is corrugated it is maintained in its corrugated shape, such as zig-zag shape in order to provide the optimal cooking of the food, e.g. meat, such as bacon. If the fat-absorbing layer is flat there is no need for special measures to maintain its shape. Typically, the sealed cooking device of the present invention is packed, such as vacuum packed, in a closed bag, which is removed before cooking is initiated in the oven or microwave oven.

### Detailed Description of embodiments and experiments

Figures 1-3 depict some typical embodiments of the present invention for purposes of illustration and proof-of-concept tests. Those skilled in the art will readily recognize that alternative embodiments of the packaging structures, dimensions, materials and methods illustrated herein may be employed without departing from the principals of the invention described herein.

Main element of any embodiment is slices of raw bacon to pack them for retail and preparation in domestic microwave ovens. Natural bacon, i.e., bacon that is sliced directly from the slab is preferred. Also processed bacon products, such as those wherein chopped meat and fat are extruded and then sliced, can be utilized with the present invention. In addition, bacon-like products made from vegetable sources of proteins and fats are also suited for use in the present invention.

It should be noted that the term "slice" as used in this specification and the appended claims, is intended to be interpreted broadly as referring to bacon or other meat products which have the general shape of slices, i.e. generally thin and flat. Accordingly, products which have been extruded or otherwise been given the shape of sliced meat, such as bacon, product are intended to be included within this term.

In a first step of packaging, the slices of uncooked bacon are placed on top of heat emitting stripes (a conductive material which adapts itself to emit heat when it absorbs microwaves) (4, Figure 1-3) on the inner surfaces of the zig-zig shaped undulations (corrugations) (2, Figure 1-3) of the paper sheet (corrugated fat-absorbing support layer) (1, Figure 1-3) between top fold (ridges) of the zig-zig shaped undulations (2, Figure 1-3) and openings (3, Figure 1-3). The number of bacon slices is limited by a minimal dimension of a microwave cavity in commercially available domestic microwave ovens. The number of slices used in the present embodiment is eight. In other embodiments, the number of slices may vary from one to more than ten, but typically less than twenty slices. The undulated sheet (1, Figure 1-3) is preferably cutout of greaseproof paper allowed to food contact at the temperature up to at least 200 °C. The paper density should be high enough to secure the mechanical stability of the packaging assembly (Figure 1-3); the preferred paper density is higher than 70 g/m². The heat emitting stripes (4, Figure 1-3) are cutout of commercially available microwave susceptor film. In this embodiment, the so-called safety type susceptor film is employed. It is understood that other types of susceptor film may find employment in other possible embodiments. The dimensions of the openings (3, Figure 1-3) should be so that the mechanical stability of the packaging assembly remains secured. Furthermore, said openings should secure the draining of the liquefied fat and condensed moisture while cooking in a microwave oven thereby separating cooked bacon slices from the redundant liquids that inhibit Maillard reaction (essentially browning and crisping of meat) of cooked bacon slices. In addition, accumulation of cooking liquids under the greaseproof paper sheet (1, Figure 1-3) makes withdrawal of cooked bacon from the packaging less messy and dangerous, which, in the final analysis, turns preparation of bacon in a microwave oven into a convenient cooking process. The preparation time of eight slices of bacon in the preferred packaging embodiment in a domestic 700-W microwave oven is between six and seven minutes depending on fat content and weight of the bacon slices. Testing under these conditions in a microwave oven gave bacon which were crispy and had the aesthetically bacon look without any blossom or other unwanted charateristics. Typical and suitable dimensions of the greaseproof paper sheet (1, Figure 1-3) is a 330 micron (330 µm) thick cardboard (20.5x40 cm) with 10 micron thick PET safety microwave susceptor strips and 10 micron thick PET film glued on the side where bacon is placed. The opening in the hollow of the cardboard are e.g. 1 cm vide and 16.5 cm long.

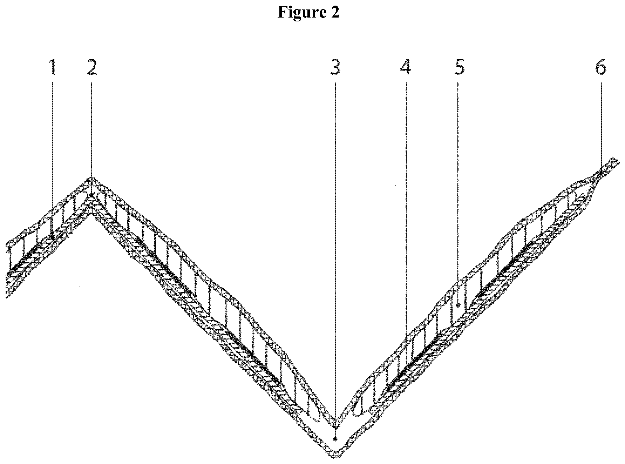

In a subsequent step of packaging, the assembly of undulated paper sheet with uncooked bacon slices (1-5, figures 1-3) is put in a transparent bag (6, figure 2-3) that comprises two sheets of flexible polymer packaging material sealed along their edges; said transparent packaging material is allowed to food contact at the temperature up to at least 200 °C. In this embodiment, the polymer material is 12 micron thick polyethylene terephthalate (PET) film. It is understood that other embodiments may use other kinds of transparent flexible materials meeting the above listed requirements. Furthermore, the bag (6, Figure 2-3) has perforations (through holes) or an overpressure valve to prevent inflation by warm moist air during cooking in a microwave oven. In this embodiment, gap perforations (not shown) are made in the bag. In addition, it is understood that an alternative embodiment that makes use of an overpressure valve, which is air-locked at temperatures below steam point, the gas mixtures modifying the atmosphere inside the bag at normal atmospheric pressure thereby extending the shelf life of the packed bacon, may be used. It is understood that some embodiments may find use of such a flexible transparent material for manufacturing the bag by joining two sheets (e.g. gluing or welding) that the joint is supposed to be disjoint during microwave cooking thereby equalizing air pressures inside and outside the bag. In some embodiments, different mixtures of nitrogen and carbon dioxide may be used. It is further understood that vacuum conditions may be as well created inside the bag in some other embodiments, which assume either a built-in overpressure valve or a disjoint-able bag sealing, with the same purpose of extension of shelf life of the packaged bacon.

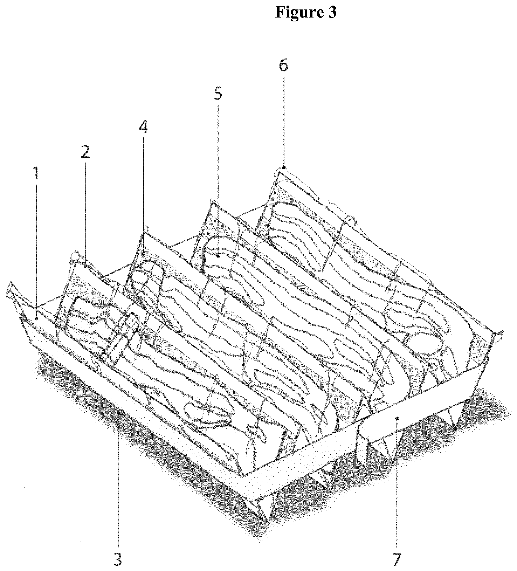

In a subsequent step of packaging, the assembly of bacon slices on the undulated and gap perforated paper sheet with heat emitting stripes (1-6, figure 1-3), is placed in a transparent sealed flexible outer bag (not shown), and folded together. The flexible stripe labels (7, Figure 3) are applied to link (pinch) two opposite edges of two ends of said outer bag across the undulations (1-3, figure 1). In some embodiments, which assume either a built-in overpressure valve or a disjoint-able bag sealing, this step may be the last packaging operation since all necessary elements providing storage, retail and cooking of bacon in a microwave oven are encountered. In a preferred embodiment however a vacuum packaging of the above-described assembly in an outer sealed bag manufactured from flexible material that has poor oxygen and moisture permeability (high-density polyethylene film is used herein) is employed. This is preferred since the perforated bag is applied around uncooked bacon, and this is the outer vacuum packaging that ensures proper shelf life and hygiene of sliced bacon product during storage and retail. It is understood that a gas mixture modifying the atmosphere in the packaging may be employed at this final step of packaging in other embodiments.

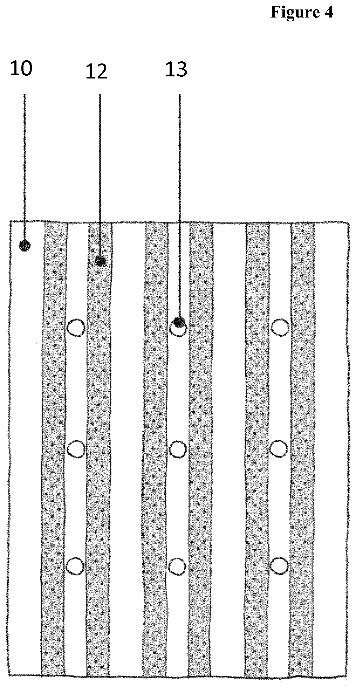

Figures 4-5 depict some typical embodiments which are not within the scope of the present invention for purposes of illustration and proof-of-concept tests. Those skilled in the art will readily recognize that alternative embodiments of the packaging structures, dimensions, materials and methods illustrated herein may be employed without departing from the principals of the invention described herein. The main difference from the embodiments of figures 1-3 is that the embodiment of figures 4-5 is flat and not corrugated. This embodiment may be produced in similar manners as described above for the embodiment of figures 1-3 except that the fat-absorbing support layer is flat without alternating ridges and hollows.

In figure 4 the fat-absorbing support layer (10) corresponds to (1) in figures 1-3 and has the same properties as described above. The heat emitting stripes (12) corresponds to (4) in figures 1-3 and has the same properties as described above. The opening (13) in the cardboard are holes e.g. 0.5 to 1 cm in diameter and typically 3 holes are located between the heat emitting stripes (12) so that bacon slices may be placed on the support layer (10) over the holes (13). In this embodiment 3 bacon slices can be positioned next to each other.

In figure 5 the slices of uncooked bacon (14) are placed on top of heat emitting stripes (12) on the paper sheet (10). A thin film (11) (referred to as a third layer preventing the meat from sticking to the fat-absorbing support layer) is placed over the fat-absorbing support layer (10) and the heat emitting stripes (12) so that the bacon (14) can be placed upon the film (11). This film (11) may also be applied to the embodiment in figures 1-3 so that the bacon is placed on the film (11) placed over the heat emitting stripes (4) on the corrugated fat-absorbing support layer (1). The number of bacon slices is limited by a minimal dimension of a microwave cavity in commercially available domestic microwave ovens. The number of slices used in the present embodiment is 3. In other embodiments, the number of slices may vary from one to more than ten, but typically less than twenty slices. The paper sheet (10) is preferably cutout of greaseproof paper allowed to food contact at the temperature up to at least 200 °C. The preferred paper density is higher than 70 g/m². The heat emitting stripes (12) are cutout of commercially available microwave susceptor film. In this embodiment, the so-called safety type susceptor film is employed. It is understood that other types of susceptor film may find employment in other possible embodiments. The dimensions of the holes (13) should be so that the mechanical stability of the packaging assembly remains secured. Furthermore, said openings should secure the draining of the liquefied fat and condensed moisture while cooking in a microwave oven thereby separating cooked bacon slices from the redundant liquids that inhibit Maillard reaction (essentially browning and crisping of meat) of cooked bacon slices. Typically, the holes (13) are placed so that when the bacon slices are positioned on the paper sheet (10) preferably with the film (11) in between, the holes (13) are covered by the bacon slices, thereby allowing the draining as mentioned above. The preparation time of 3 slices of bacon in the preferred packaging embodiment in a domestic 700-W microwave oven is between 2 and 3 minutes depending on fat content and weight of the bacon slices. Testing under these conditions in a microwave oven gave bacon which were crispy and had the aesthetically bacon look without any blossom or other unwanted charateristics. Typical and suitable dimensions of the greaseproof paper sheet (10) is a 330 micron (330 µm) thick cardboard (adapted to the size of a microwave oven) with 10 micron thick PET safety microwave susceptor strips and 10 micron thick PET film glued on the side where bacon is placed. In a subsequent step of packaging, the assembly of paper sheet (10) with uncooked bacon slices (14) is put in a transparent bag (15) that comprises two sheets of flexible polymer packaging material sealed along their edges; said transparent packaging material is allowed to food contact at the temperature up to at least 200 °C. In this embodiment, the polymer material is 12 micron thick polyethylene terephthalate (PET) film. It is understood that other embodiments may use other kinds of transparent flexible materials meeting the above listed requirements. Furthermore, the bag (15) has perforations (through holes) or an overpressure valve to prevent inflation by warm moist air during cooking in a microwave oven. In this embodiment, gap perforations (not shown) are made in the bag. Further details of this embodiment may be deducted from the detailed description above under figures 1-3.In the preferred embodiment, the cooking of the packaged bacon slices in a microwave oven comprises the steps of:
a) removal of the outer vacuum packaging bag;
b) unlinking of the flexible stripe labels (7) and unfolding (deployment) the packaging assembly (1-6) that contains bacon slices;
c) placement of the unfolded (deployed) packaging (figure 3) containing bacon slices inside the cavity of a microwave oven;
d) microwave heating of the packaged bacon slices;
e) cutting the flexible stripe labels (7), unsealing the transparent bag from the top, and removal of cooked bacon slices.

It is further realized that if the flexible stripe labels (7, Figure 3) are manufactured from flexible material that does not change its mechanical properties at least up to the temperature of 200 °C, the above-described preferred packaging embodiment may be also employed to cook bacon slices in conventional (not microwave) cooking ovens at the temperature not exceeding 200 °C.

All headings and sub-headings are used herein for convenience only and should not be construed as limiting the invention in any way.

Any combination of the above-described elements in all possible variations thereof is encompassed by the invention unless otherwise indicated herein or otherwise clearly contradicted by context.

Recitation of ranges of values herein are merely intended to serve as a shorth method of referring individually to each separate value falling within the range, unless other-wise indicated herein, and each separate value is incorporated into the specification as if it were individually recited herein. Unless otherwise stated, all exact values provided herein are representative of corresponding approximate values (e.g., all exact exemplary values provided with respect to a particular factor or measurement can be considered to also provide a corresponding approximate measurement, modified by "about," where appropriate).

All methods described herein can be performed in any suitable order unless other-wise indicated herein or otherwise clearly contradicted by context.

The terms "a" and "an" and "the" and similar referents as used in the context of de-scribing the invention are to be construed to cover both the singular and the plural, unless otherwise indicated herein or clearly contradicted by context.

The use of any and all examples, or exemplary language (e.g., "such as") provided herein, is intended merely to better illuminate the invention and does not pose a limitation on the scope of the invention unless otherwise indicated. No language in the specification should be construed as indicating any element is essential to the practice of the invention unless as much is explicitly stated.

The citation and incorporation of patent documents herein is done for convenience only and does not reflect any view of the validity, patentability and/or enforceability of such patent documents.

The description herein of any aspect or embodiment of the invention using terms such as "comprising", "having", "including" or "containing" with reference to an element or elements is intended to provide support for a similar aspect or embodiment of the invention that "consists of', "consists essentially of', or "substantially comprises" that particular element or elements, unless otherwise stated or clearly contradicted by context (*e.g.,* a composition described herein as comprising a particular element should be understood as also describing a composition consisting of that element, unless otherwise stated or clearly contradicted by context).

This invention includes all modifications and equivalents of the subject matter re-cited in the aspects or claims presented herein to the maximum extent permitted by applicable law.

## Claims

1. A sealed oxygen-tight cooking device for bacon comprising
a) a first layer with means for preventing inflation by warm moist air during cooking,
b) a second layer impervious to grease and liquid from the bacon,
c) a corrugated fat-absorbing support layer between the first layer and the second layer, wherein the corrugated fat-absorbing support layer has openings there through, said corrugated fat-absorbing support layer is adapted to support a bacon thereon, and
d) the bacon placed on the corrugated fat-absorbing support layer;
wherein the first layer, the second layer and the corrugated fat-absorbing support layer are made from materials suitable for use in an oven,
**characterised in that** the corrugated fat-absorbing support layer has alternating ridges and hollows, said openings being located in said hollows.

2. The cooking device of claim 1 wherein the oven is a microwave oven.

3. The cooking device of claim 1 or 2, wherein a third layer preventing the bacon from sticking to the corrugated fat-absorbing support layer is placed between the corrugated fat-absorbing support layer and the bacon.

4. The cooking device of any one of claims 1-3, wherein the first layer and second layer are made of one bag.

5. The cooking device of any one of claims 1-3 wherein the corrugated fat-absorbing support layer is made of a grease proof material allowed to bacon contact at a temperature up to at least 250 °C.

6. The cooking device of any one of claims 1-5, wherein the second layer is in contact with the corrugated fat-absorbing support layer and follows the corrugated shape of the corrugated fat-absorbing support layer.

7. The cooking device of any one of claims 1-6, wherein a conductive material which adapts itself to emit heat when it absorbs microwaves is placed on the corrugated fat-absorbing support layer or is incorporated in the corrugated fat-absorbing support layer.

8. The cooking device of claim 7 wherein the conductive material is a heat emitting stripe cutout of commercially available microwave susceptor film.

9. The cooking device of any one of claims 1-8, wherein the means for preventing inflation by warm moist air during cooking is selected from perforations and a valve.

10. The cooking device of claim 9 wherein the means is an overpressure valve.

## Patentansprüche

1. Eine versiegelte sauerstoffdichte Kochvorrichtung für Bacon, umfassend
a) eine erste Schicht mit einem Mittel zum Verhindern des Aufblähens durch warme, feuchte Luft während des Kochens,
b) eine zweite Schicht, die für Fett und Flüssigkeit aus dem Bacon undurchlässig ist,
c) eine wellige fettabsorbierende Trägerschicht zwischen der ersten Schicht und der zweiten Schicht, wobei die wellige fettabsorbierende Trägerschicht durchgehende Öffnungen aufweist, wobei die wellige fettabsorbierende Trägerschicht angepasst ist, um Bacon darauf zu tragen, und
d) den auf der welligen fettabsorbierenden Trägerschicht angeordneten Bacon;
wobei die erste Schicht, die zweite Schicht und die wellige fettabsorbierende Trägerschicht aus Materialien hergestellt sind, die zur Verwendung in einem Ofen geeignet sind, **dadurch gekennzeichnet, dass** die wellige fettabsorbierende Trägerschicht abwechselnd Rippen und Vertiefungen aufweist, wobei sich die Öffnungen in den Vertiefungen befinden.

2. Die Kochvorrichtung des Anspruchs 1, wobei der Ofen ein Mikrowellenofen ist.

3. Die Kochvorrichtung des Anspruchs 1 oder 2, wobei eine dritte Schicht, die verhindert, dass der Bacon an der welligen fettabsorbierenden Trägerschicht haftet, zwischen der welligen fettabsorbierenden Trägerschicht und dem Bacon angeordnet ist.

4. Die Kochvorrichtung von einem der Ansprüche 1 bis 3, wobei die erste Schicht und die zweite Schicht aus einem Beutel bestehen.

5. Die Kochvorrichtung von einem der Ansprüche 1 bis 3, wobei die wellige fettabsorbierende Trägerschicht aus einem fettdichten Material besteht, das bei einer Temperatur von bis zu mindestens 250°C mit Bacon in Kontakt kommen kann.

6. Die Kochvorrichtung von einem der Ansprüche 1 bis 5, wobei die zweite Schicht in Kontakt mit der welligen fettabsorbierenden Trägerschicht ist und der welligen Form der welligen fettabsorbierenden Trägerschicht folgt.

7. Die Kochvorrichtung von einem der Ansprüche 1 bis 6, wobei ein leitfähiges Material, das sich selbst anpasst, Wärme abzugeben, wenn es Mikrowellen absorbiert, auf der welligen fettabsorbierenden Trägerschicht angeordnet ist oder in der welligen fettabsorbierenden Trägerschicht einbezogen ist.

8. Die Kochvorrichtung des Anspruchs 7, wobei das leitfähige Material ein wärmeemittierender Streifenausschnitt aus kommerziell erhältlicher Mikrowellen-Suszeptorfolie ist.

9. Die Kochvorrichtung von einem der Ansprüche 1 bis 8, wobei das Mittel zum Verhindern des Aufblähens durch warme, feuchte Luft während des Kochens aus Perforationen und einem Ventil ausgewählt ist.

10. Die Kochvorrichtung des Anspruchs 9, wobei das Mittel ein Überdruckventil ist.

## Revendications

1. Un dispositif de cuisson étanche à l'oxygène scellé pour du bacon comprenant
a) une première couche avec un moyen pour empêcher le gonflement par de l'air chaud et humide pendant la cuisson,
b) une seconde couche imperméable à la graisse et au liquide provenant du bacon,
c) une couche de support absorbant les graisses ondulée entre la première couche et la seconde couche, dans lequel la couche de support absorbant les graisses ondulée a des ouvertures passantes, ladite couche de support absorbant les graisses ondulée est adaptée pour supporter du bacon situé dessus, et
d) le bacon placé sur la couche de support absorbant les graisses ondulée;
dans lequel la première couche, la seconde couche et la couche de support absorbant les graisses ondulée sont réalisées en matériaux adaptés à une utilisation dans un four, **caractérisé en ce que** la couche de support absorbant les graisses ondulée a des arêtes et des creux alternés, lesdites ouvertures étant situées dans lesdits creux.

2. Le dispositif de cuisson de la revendication 1, dans lequel le four est un four à micro-ondes.

3. Le dispositif de cuisson de la revendication 1 ou 2, dans lequel une troisième couche empêchant le bacon de coller à la couche de support absorbant les graisses ondulée est placée entre la couche de support absorbant les graisses ondulée et le bacon.

4. Le dispositif de cuisson de l'une quelconque des revendications 1 à 3, dans lequel la première couche et la seconde couche sont constituées d'un sac.

5. Le dispositif de cuisson de l'une quelconque des revendications 1 à 3, dans lequel la couche de support absorbant les graisses ondulée est constituée d'un matériau résistant aux graisses qui peut entrer en contact avec le bacon à une température allant jusqu'à au moins 250 °C.

6. Le dispositif de cuisson de l'une quelconque des revendications 1 à 5, dans lequel la seconde couche est en contact avec la couche de support absorbant les graisses ondulée et épouse la forme ondulée de la couche de support absorbant les graisses ondulée.

7. Le dispositif de cuisson de l'une quelconque des revendications 1 à 6, dans lequel un matériau conducteur qui s'adapte pour émettre de la chaleur lorsqu'il absorbe des micro-ondes est placé sur la couche de support absorbant les graisses ondulée ou est incorporé dans la couche de support absorbant les graisses ondulée.

8. Le dispositif de cuisson de la revendication 7, dans lequel le matériau conducteur est un découpe de bandes émetteur de chaleur d'un film suscepteur de micro-ondes disponible dans le commerce.

9. Le dispositif de cuisson de l'une quelconque des revendications 1 à 8, dans lequel le moyen pour empêcher le gonflage par de l'air chaud et humide pendant la cuisson est choisi parmi des perforations et une soupape.

10. Le dispositif de cuisson de la revendication 9, dans lequel le moyen est une soupape de surpression.
